**Europäisches Patentamt**

**European Patent Office**

**Office européen des brevets**

(19)

(11) Veröffentlichungsnummer : **0 079 645**
**B1**

(12) # EUROPÄISCHE PATENTSCHRIFT

(45) Veröffentlichungstag der Patentschrift :
28.08.85

(21) Anmeldenummer : 82201393.4

(22) Anmeldetag : 08.11.82

(51) Int. Cl.⁴ : **G 08 B 19/02, G 01 N 21/15,
B 64 D 15/22, F 25 D 21/02**

(54) **Vorrichtung zur Überwachung der Eisbildung.**

(30) Priorität : **13.11.81 CH 7310/81**

(43) Veröffentlichungstag der Anmeldung :
**25.05.83 Patentblatt 83/21**

(45) Bekanntmachung des Hinweises auf die Patenterteilung : **28.08.85 Patentblatt 85/35**

(84) Benannte Vertragsstaaten :
**BE CH DE FR GB IT LI NL SE**

(56) Entgegenhaltungen :
EP-A- 0 005 696
CA-A- 1 089 949
DE-A- 2 159 731
DE-A- 2 420 594
DE-U- 1 939 867
GB-A- 2 056 057

(73) Patentinhaber : **Kovacs, Paul
Am Brunnenbächli 2
CH-8125 Zollikerberg (CH)**

(72) Erfinder : **Kovacs, Paul
Am Brunnenbächli 2
CH-8125 Zollikerberg (CH)**

(74) Vertreter : **Seifert, Helmut E.
RITSCHER & SEIFERT Patentanwälte VSP Auf der
Mauer 4
CH-8001 Zürich (CH)**

EP 0 079 645 B1

Jouve, 18, rue St-Denis, 75001 Paris, France

## Beschreibung

Die vorliegende Erfindung betrifft eine Vorrichtung zum Ueberwachen der Eisbildung mit einer Strahlungsquelle, die Strahlen kontinuierlich aussendet, mit einer strahlungsempfindlichen Einrichtung, die auf die einfallenden Strahlen anspricht und ein elektrisches Ausgangssignal erzeugt und mit einem transparenten Element, das zwischen der einen Strahlungsquelle und der strahlungsempfindlichen Einrichtung angeordnet ist und dessen Strahlendurchlässigkeit sich in Abhängigkeit seines Oberflächenzustandes ändert.

Ungewollte durch Umgebungs- oder Betriebsbedingungen bewirkte Eisbildung an Oberflächen von Maschinen oder Anlagen kann deren Funktion nachteilig beeinflussen oder diese sogar beschädigen. Das gilt beispielsweise für Wärmeaustauscher, deren Strömungskanäle durch Eisbildung verengt werden oder für Flugzeuge, deren Gewicht beim Vereisen der Verschalung unzulässig vergrössert wird oder deren Steuerruder blockiert werden können. Besonders gefährdet sind die Einläufe von Axialkompressoren, die in Abhängigkeit von den veränderlichen atmosphärischen Bedingungen Luft mit veränderlichem Feuchtigkeitsgehalt und veränderlicher Temperatur ansaugen und bei denen beim Vereisen die Druckverteilung in den nachfolgenden Kompressorstufen in nicht vorhersehbarer Weise beeinträchtigt wird und die beschädigt werden können, wenn die Eisablagerung eine Unwucht des Rotors bewirkt oder Eisstücke von umlaufenden Schaufeln abgelöst und gegen andere Maschinenteile geschleudert werden.

Es sind darum schon unterschiedliche Vorrichtungen bekannt mit denen die Eisbildung auf Oberflächen überwacht werden kann.

Eine erste bekannte Vorrichtung enthält einen auf einer Trägerplatte angeordneten Zapfen, der in den zu überwachenden Bereich hinragt, bzw. diesem Bereich benachbart angeordnet ist. Mit Hilfe eines elektrischen Geräts wird der Zapfen zu Schwingungen angeregt. Die Frequenz dieser Schwingungen ist vom Reinheitsgrad der Oberfläche des Zapfens abhängig, weshalb eine beginnende Vereisung eine Frequenzverschiebung zur Folge hat. Sobald die gemessene Frequenzverschiebung einen vorgegebenen Wert erreicht, wird ein Warnsignal ausgelöst. Die Vorrichtung hat den Nachteil, dass eine Vereisung von einer Verschmutzung des Zapfens, beispielsweise durch Staub, nicht unterschieden werden kann, was ihre praktischen Verwendungsmöglichkeiten wesentlich einschränkt.

Andere bekannte Vorrichtungen (z. B. DE-U-1 939 867, DE-A1-2 159 731) arbeiten nach dem Prinzip der Lichtschranke mit einem im Lichtweg zwischen der Lichtquelle und dem Lichtempfänger angeordneten Spiegel. Beim Kondensieren von Feuchtigkeit oder der Eisbildung auf dem Spiegel wird dessen Reflexionsvermögen verringert, was eine entsprechende Aenderung des Ausgangssignals des Lichtempfängers bewirkt. Wegen der optischen Transparenz und der guten optischen Reflexion dünner Eisschichten ist die Anzeigeempfindlichkeit dieser Vorrichtung, besonders bei beginnender Eisbildung, relativ gering. Ausserdem kann auch mit dieser Vorrichtung zwischen Eisbildung und Verschmutzung nicht unterschieden werden.

Der vorliegenden Erfindung liegt darum die Aufgabe zugrunde, eine Vorrichtung zur Ueberwachung der Eisbildung zu schaffen, die eine hohe Empfindlichkeit bei beginnender Eisbildung aufweist und die vorzugsweise auch eine Unterscheidung zwischen Eisbildung und Verschmutzung des als Sensor verwendeten Bauelements ermöglicht.

Erfindungsgemäss wird diese Aufgabe mit einer Vorrichtung der eingangs genannten Art gelöst, die gekennzeichnet ist durch eine zweite Strahlungsquelle, die Strahlen intermittierend aussendet, wobei die lichtempfindliche Einrichtung auf die Strahlen der ersten und der zweiten Strahlungsquelle anspricht, um in Abhängigkeit von der Strahlendurchlässigkeit des transparenten Elementes entweder ein dominierend kontinuierliches oder ein stark intermittierendes Signal abzugeben.

Die erfindungsgemässe Vorrichtung nutzt die nichtlineare Kennlinie der lichtempfindlichen Einrichtung und ermöglicht dadurch ein Ausgangssignal, dessen Aenderung, bezogen auf die Aenderung des einfallenden Lichts, im Bereich einer beginnenden Vereisung grösser ist als im Bereich einer starken Vereisung. Dadurch wird es möglich eine beginnende Vereisung rechtzeitig und mit Sicherheit zu erkennen und, gegebenenfalls, Gegenmassnahmen zu treffen, die eine Beeinträchtigung der Funktion oder eine Beschädigung der überwachten Maschine verhindern.

Eine bevorzugte Ausführungsform der Vorrichtung weist eine elektronische Ueberwachungsschaltung auf, die ermöglicht, zwischen einer durch Eisbildung oder durch Schmutzablagerung bewirkten Aenderung des Ausgangssignals des Lichtempfängers zu unterscheiden. Diese Ueberwachungsschaltung kann zum Steuern einer Reinigungseinrichtung verwendet werden, die aktiviert wird, wenn die Verschmutzung des transparenten Elements einen voreingestellten Wert erreicht hat.

Nachfolgend werden die Erfindung und eine bevorzugte, praktisch erprobte Ausführungsform mit Hilfe der Figuren beschrieben. Es zeigen :

Figur 1 eine schematische Darstellung des Messkopfs der erfindungsgemässen Vorrichtung,

Figur 2 die typische Kennlinie einer Fotodiode,

Figuren 3a und 3b zwei um 90° versetzte Längsschnitte durch eine praktisch erprobte Ausführungsform des Messkopfs der erfindungsgemässen Vorrichtung,

Figur 4 das Prinzipschema einer zum Betrieb des Messkopfs gemäss den Fig. 3a und 3b geeigneten elektronischen Schaltung und

Figuren 5a und 5b das Blockschaltbild der in der Schaltung gemäss Fig. 4 verwendeten Schaltlogik und ein dazugehöriges Logikschema.

In den Figuren sind für gleiche Bauelemente oder -Gruppen gleiche Bezugszeichen verwendet.

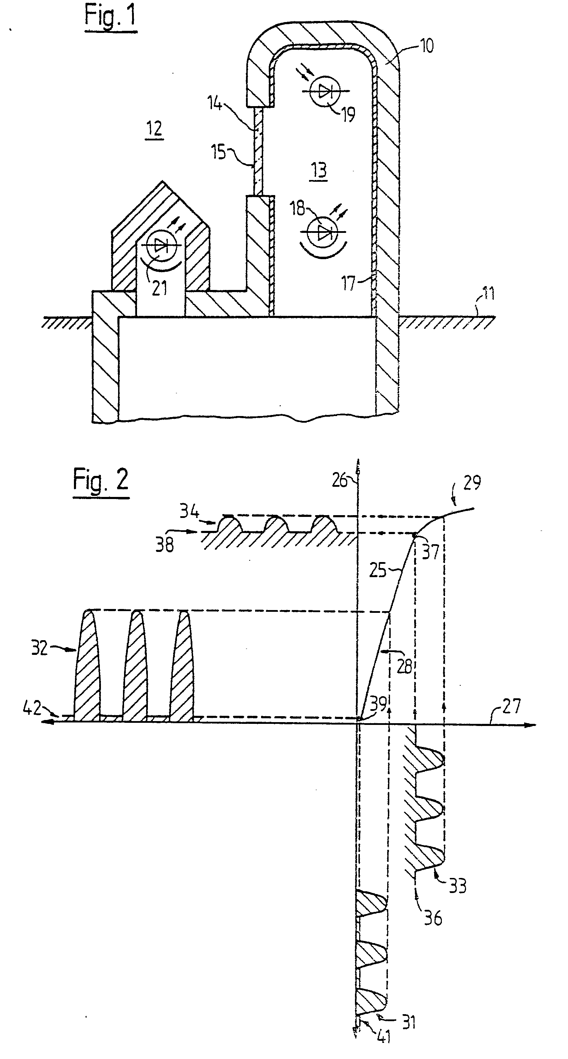

Der in Fig. 1 in einem schematischen Schnitt gezeigte Messkopf enthält ein allseitig geschlossenes Gehäuse 10, das in einen von einer Aussenwand 11 seitlich begrenzten Kanal 12 hineinragt. Das Gehäuse schliesst einen Innenraum 13 ein und enthält ein transparentes Fenster 14, dessen äussere Oberfläche 15 als Messfläche vorgesehen ist. Die Wände des Innenraums sind mit einer lichtabsorbierenden Schicht 17 abgedeckt und in den Innenraum sind eine erste Strahlungsquelle 18 und eine lichtempfindliche Einrichtung 19 derart angeordnet, dass die von der Strahlungsquelle emittierte Strahlung zum überwiegenden Teil auf die lichtempfindliche Einrichtung fällt. Weiter ist ausserhalb des Innenraums eine zweite Strahlungsquelle 21 derart angeordnet, dass deren Strahlung durch das Fenster 14 ebenfalls auf die lichtempfindliche Einrichtung 19 fallen kann.

Als Strahlungsquellen 18, 21 werden vorzugsweise im Infrarotbereich strahlende lichtemittierende Lichtdioden (im folgenden kurz LED verwendet und als lichtempfindliche Einrichtung 19 eine ebenfalls im Infrarotbereich empfindliche Fotodiode). Solche Bauelemente sind handelsüblich und haben für die beschriebene Vorrichtung den Vorteil, dass das emittierte bzw. empfangene Licht nur wenig durch Umgebungslicht gestört wird. Das transparente Fenster 14 kann einfacherweise eine Glasplatte sein, besteht aber vorzugsweise aus Saphirglas.

Die Fig. 2 zeigt den typischen Verlauf der Kennlinie 25 einer Halbleiter-Fotodiode. Die Kennlinie bestimmt den auf dem Ordinatenast 26 aufgetragenen Signalstrom in Abhängigkeit von der auf dem Abszissenast 27 aufgetragenen Beleuchtungsstärke. Die Kennlinie weist im Bereich kleiner und mittlerer Beleuchtungsstärke einen steil ansteigenden linearen Teil 28 auf, an den im Bereich grosser Beleuchtungsstärken ein sich verflachender, eine Sättigung anzeigender Teil 29 anschliesst. Die unterschiedliche Neigung der Kennlinie bewirkt, dass ein optisches Eingangssignal 31, das im Bereich kleiner und mittlerer Beleuchtungsstärke liegt, ein relativ starkes elektrisches Ausgangssignal 32 erzeugt, während ein optisches Eingangssignal 33, das im Bereich hoher Beleuchtungsstärke liegt, nur ein relativ schwaches Ausgangssignal 34 erzeugt.

Diese Erscheinung wird bei der erfindungsgemässen Vorrichtung benutzt, um das Vereisen der Messfläche und das Verschmutzen durch Staubablagerung klar zu unterscheiden. Dazu wird beim Betrieb des Messkopfs die Fotodiode 19 von der ersten LED 18 mit pulsierendem Licht und von der zweiten LED 21 mit kontinuierlichem Licht beleuchtet. Weil die erste LED und die Fotodiode im gleichen Innenraum 13 eingeschlossen sind, wird die von dem pulsierenden Licht erzeugte Beleuchtungsstärke auf der Fotodiode von äusseren Bedingungen praktisch nicht beeinflusst. Dagegen fällt das Licht der zweiten LED 21 durch das Fenster 14 auf die Fotodiode, wobei die von der zweiten LED 21 erzeugte Beleuchtungsdichte von der Transparenz des Fensters bzw. der Belegung seiner äusseren Oberfläche 15 mit einer Eis- oder Schmutzschicht abhängig ist.

Beim Betrieb dieses Messkopfs wird die Helligkeit der zweiten LED 21 auf einen Wert 36 eingestellt, der bei optimaler Transparenz des Fensters 14 den Arbeitspunkt 37 der Fotodiode in den flachen Teil 29 der Kennlinie verschiebt. Das pulsierende Licht von der ersten LED 18 bewirkt dann ein relativ schwaches pulsierendes Ausgangssignal 34, das einem relativ starken kontinuierlichen Ausgangssignal 38 überlagert ist. Nimmt die Transparenz des Fensters 14 ab, und damit auch der Anteil der von der zweiten LED 21 erzeugten Beleuchtungsstärke 41, dann wird der Arbeitspunkt auf der Kennlinie verschoben und erreicht beispielsweise den Punkt 39 am unteren Ende des linearen Teils 28. Dann enthält das Ausgangssignal der Fotodiode 19 nur noch einen sehr kleinen kontinuierlichen Anteil 42, aber einen verstärkten pulsierenden Anteil 32. Wird der kontinuierliche Anteil des Ausgangssignals der Fotodiode unterdrückt und nur der pulsierende Anteil ausgewertet, dann bewirkt dessen nichtlineare Abhängigkeit von der gesamten Beleuchtungsstärke eine Aenderung des Ausgangssignals, die im Bereich hoher Beleuchtungsstärken grösser ist als im Bereich kleiner Beleuchtungsstärken, was einer grösseren Empfindlichkeit bei geringer und einer kleineren Empfindlichkeit bei starker Ablagerung auf dem Fenster entspricht.

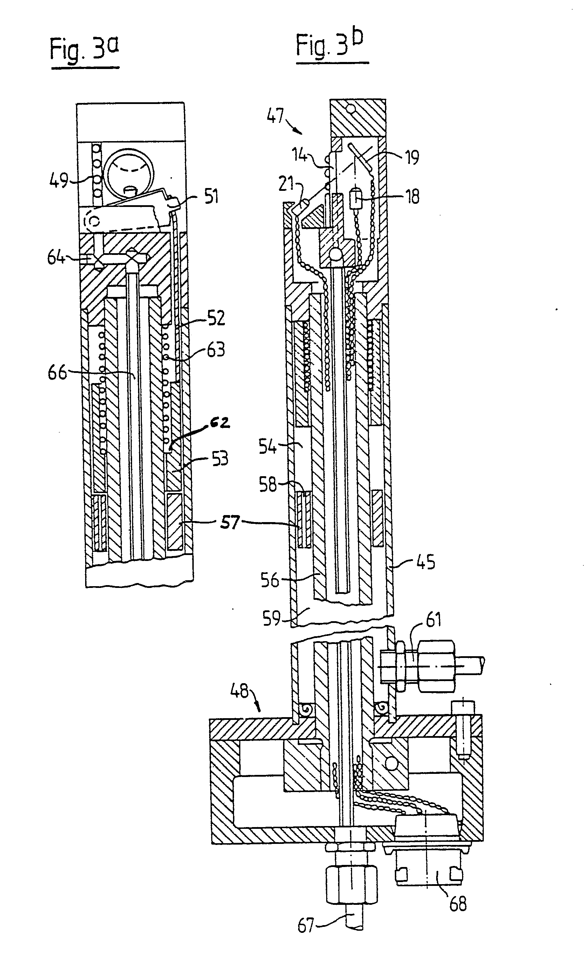

Die Figuren 3a und 3b zeigen zwei um 90° gedrehte Längsschnitte durch eine praktisch erprobte Ausführungsform des erfindungsgemässen Messkopfs. Dieser Messkopf enthält ein Aussenrohr 45, an dessen einem Ende ein der Fig. 1 entsprechender Kopfteil 47 und an dessen anderem Ende ein Sockel 48 befestigt ist. Der Kopfteil 47 trägt eine erste und eine zweite LED 18 bzw. 21, eine Fotodiode 19 und enthält im Lichtweg zwischen der zweiten LED und der Fotodiode 19 ein transparentes Fenster 14.

Weiter ist bei dieser Ausführungsform eine Reinigungseinrichtung für das Fenster 14 vorgesehen. Diese Einrichtung besteht aus mehreren seitlich vom Fenster 14 angeordnete Sprühdüsen 49 und einem schwenkbaren Wischer 51. Der Wischer ist an seinem einen Ende am Kopfteil 47 angelenkt und an seinem freien Ende mit einer Kolbenstange 52 verbunden, die an einem Kolben 53, der einen ringförmigen Querschnitt aufweist, befestigt ist. Der Kolben ist in einem Arbeitszylinder 54, der ebenfalls einen ringförmigen Querschnitt aufweist, verschiebbar. Der Arbeitszylinder wird von der Innenwand des Aussenrohrs 45, der Aussenwand eines konzentrisch im Aussenrohr angeordneten Innenrohrs 56, sowie vom Kopfteil und einer zwischen die beiden Rohre eingepassten Muffe 57 begrenzt. Die Muffe 57 enthält eine achsparallele Bohrung 58, die einen Verbindungskanal zwischen dem Arbeitszylinder 54 und einem Vorraum 59 bildet. An den Vorraum ist eine Rohrleitung 61 angeschlossen, die zu einem nicht gezeigten Ventil und Druckluftbehälter führt. Der Kolben 53 enthält eine Ausnehmung 62, in die eine Spiralfeder 63 eingelegt ist, deren freies Ende am Kopfteil 47 anliegt und die im Ruhezustand den Kolben 53 gegen die Muffe 57 drückt, wie es in Fig. 3a gezeigt ist.

Die Sprühdüsen 49 sind über Bohrungen 64 mit einem im Innenrohr 56 angeordneten Leitungsrohr 66 verbunden, das an einen am Sockel befestigten Schlauch 67 angeschlossen ist, der zu einem nicht gezeigten Behälter für eine Reinigungsflüssigkeit führt.

Die elektrischen Anschlussleitungen, für die im Kopfteil angeordneten LED's und die Fotodiode sind ebenfalls durch das Innenrohr zu einer am Sockel befestigten Kabelkupplung 68 geführt, die mit einem nicht gezeigten Anschlusskabel mit einer elektronischen Auswerteschaltung verbunden werden kann.

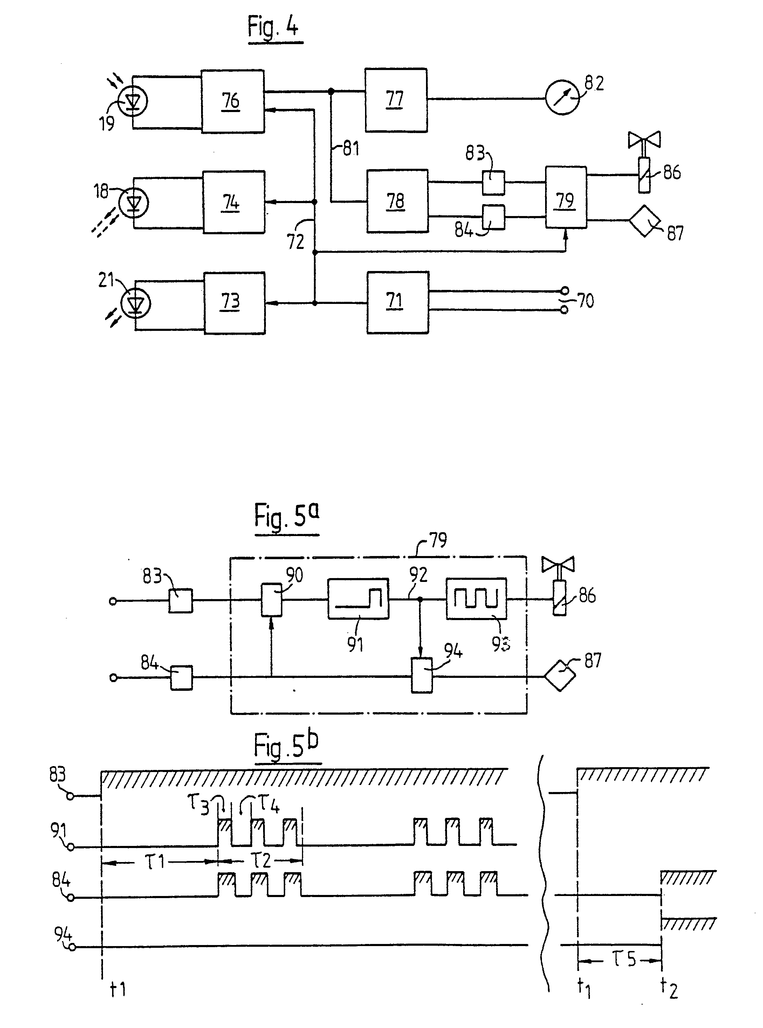

Eine für den Betrieb des beschriebenen Messkopf geeignete Auswerteschaltung ist in Fig. 4 gezeigt. Diese enthält ein an eine Speisespannungsquelle 70 anschliessbares Netzgerät 71, an das über eine verzweigte Leitung 72 Speisespannungskreise 73, 74 für die beiden LED 21 bzw. 18, ein Eingangsverstärker 76 für das Ausgangssignal der Fotodiode 19, ein dem Eingangsverstärker 76 nachgeschalteter Analogverstärker 77 und ein Grenzwertverstärker 78 sowie eine Schaltlogik bzw. Steuerschaltung 79 angeschlossen sind. Der Signalausgang des Eingangsverstärkers 76 ist über eine ebenfalls verzweigte Signalleitung 81 mit dem Eingang des Analogverstärkers 77 und dem Eingang des Grenzwertverstärkers 78 verbunden. Der Grenzwertverstärker 78 enthält zwei praktisch gleichartige Verstärkerkanäle, die zum Erregen von zwei Relais 83, 84 mit unterschiedlicher Ansprechempfindlichkeit vorgesehen sind.

An den Ausgang des Analogverstärkers 77 ist ein Drehspulinstrument 82, und an die beiden Ausgänge des Grenzwertverstärkers 78 sind die Erregerwicklungen von zwei Schaltrelais 83, 84 angeschlossen, deren Schaltkontakte mit zugeordneten Eingängen der Steuerschaltung 79 verbunden sind. Die Steuerschaltung 79 weist zwei Ausgänge auf, von denen der eine zum Erregen eines Magnetventils 86, das die Wascheinrichtung 49, 51 steuert und der andere zum Erregen einer Alarmeinrichtung 87 vorgesehen ist.

Das Netzgerät 71, der Speisespannungskreis für die zweite LED 21, der Eingangsverstärker 76 und der Analogverstärker 77 können für die noch zu beschreibende Arbeitsweise der Vorrichtung von jedem Fachmann ohne erfinderisches Zutun aufgebaut werden, weshalb auf deren detailierte Beschreibung verzichtet wird. Der Speisespannungskreis 74 für die erste LED 18 ist als Oszillator ausgebildet, der die erste LED 18 mit pulsierendem Gleichstrom mit einer Frequenz von beispielsweise 1 kHz erregt. Der Aufbau eines solchen Oszillators und des Grenzwertverstärkers liegt ebenfalls im Bereich fachmännischen Könnens, weshalb auf deren Beschreibung ebenfalls verzichtet wird.

Der Aufbau der Steuerschaltung 79 ist in Fig. 5a gezeigt. Die Steuerschaltung 79 weist zwei Eingänge auf, von denen der eine an den Kontaktkreis des einen Schaltrelais 83 angeschlossen und über ein erstes Relais 90, dessen Kontakte im nichterregten Zustand geschlossen sind, mit einem ersten Impulsgeber 91 verbunden ist. Vom Ausgang dieses ersten Impulsgebers 91 führt eine Leitung 92 zu einem zweiten Impulsgeber 93, dessen Ausgang mit dem Magnetventil 86 verbunden ist. Die Steuerschaltung 79 enthält weiter eine zweites Relais 94, dessen Kontakte im nichterregten Zustand den mit dem anderen Schaltrelais 84 verbundenen anderen Eingang mit der Alarmeinrichtung 87 verbinden. Die Erregerwicklung des ersten Relais 90 ist an den mit dem anderen Schaltrelais 84 verbundenen Eingang und die Erregerwicklung für das zweite Relais 94 ist an die Verbindungsleitung 92 zwischen den beiden Impulsgebern 91, 92 angeschlossen. Die beiden Impulsgeber 91, 92 sind zum Erzeugen von Impulsen mit einigen Sekunden Dauer und bis zu mehreren Minuten Abstand voneinander vorgesehen, weshalb dafür vorzugsweise sogenannte Blinkrelais mit einstellbarer Schaltzeit verwendet werden.

Nachfolgend wird die Arbeitsweise des in Fig. 3a und 3b gezeigten Messkopfs und der in Fig. 4 gezeigten Auswerteschaltung mit Hilfe des in Fig. 5b gezeichneten Schema beschrieben. In diesem Schema sind der deutlicheren Darstellung wegen die Breite der einzelnen Impulse und deren Abstand voneinander gegenüber den Pausen zwischen den Impulszügen stark vergrössert gezeichnet. Für die Beschreibung sei angenommen, dass die Arbeitsbedingungen der beiden LED 18, 21, der Fotodiode 19 und der Verstärker derart eingestellt sind, dass bei optimaler Transparenz des Fensters 14 im Messkopf die Ausgangssignale des Analog- und des Grenzwertverstärkers 77, 78 etwa 15 % des einem lichtundurchlässigen Fenster entsprechenden maximalen Ausgangssignals betragen. Weiter sei angenommen, dass das eine und das andere Schaltrelais 83 bzw. 84 erregt werden, wenn der Signalstrom im zugeordneten Verstärkerkanal einen Wert erreicht, der einer Verringerung der Lichtdurchlässigkeit des Fensters 14 um 15 % bzw. 45 % entspricht wobei die Anzeige des Drehspulinstruments 30 % bzw. 60 % des Maximalwerts beträgt. Schliesslich sei angenommen, dass beim Aktivieren des ersten Impulsgebers 91 die Impulsfolge mit einer Pause beginnt, während beim Aktivieren des zweiten Impulsgebers 93 die Impulsfolge mit einem Impuls beginnt.

Wenn am Anfang des Betriebs das Fenster 14 des Messkopfs optimal transparent ist, d. h. seine Aussenfläche weder mit einer Eisschicht noch mit Staub belegt ist, dann zeigt das Drehspulinstrument entsprechend den oben genannten Bedingungen etwas 15 % seines Maximalwertes an, und die beiden Schaltrelais 83, 84 werden nicht erregt, weshalb auch weder das Magnetventil 86 noch die Alarmeinrichtung 87 aktiviert wird.

Wird auf dem Fenster 14 des Messkopfs Staub abgelagert und nimmt dessen Lichtdurchlässigkeit langsam ab, dann wird gemäss den obigen Annahmen das eine Schaltrelais 83 erregt, wenn die Anzeige auf dem Drehspulinstrument 82 etwa 30 % seines Maximalwerts erreicht hat. Das Ausgangssignal 100 (Fig. 5b) des zum Zeitpunkt t1 erregten Schaltrelais 83 aktiviert dann über das im Ruhezustand geschlossene erste Relais 90 den ersten Impulsgeber 91, dessen Impulsfolge mit einer Pause 101 beginnt. Wird während der Dauer $\tau 1$ dieser Pause das andere Schaltrelais 84 und darum auch das erste Relais 90 nicht erregt, dann aktiviert der erste Impuls des ersten Impulsgebers 91 während seiner Dauer $\tau 2$ den zweiten Impulsgeber 92. Gleichzeitig erregt dieser Impuls das zweite Relais 94 und unterbricht damit die Verbindung vom anderen Schaltrelais 84 zur Alarmeinrichtung 87. Der zweite Impulsgeber 93 erzeugt dann eine Impulsfolge mit Impulsen der Dauer $\tau 3$ und Pausen der Dauer $\tau 4$. Diese Impulse werden an das Magnetventil 86 geleitet, das während der Dauer jedes Impulses erregt wird, und dabei die Zuleitung von Druckluft in dem Arbeitszylinder 54 und einer Waschflüssigkeit zu den Düsen 49 freigibt. Der Kolben 53 wird dann von der Druckluft in die in Fig. 3b gezeigte Stellung verschoben, welche Verschiebung mittels der Kolbenstange 52 auf den Wischer 51 übertragen wird, sodass der Wischer 51 auf dem Fenster 14 eine Schwenkbewegung ausführt. Zugleich wird die Waschflüssigkeit aus den Düsen 49 auf das Fenster 14 gesprüht. In den Pausen zwischen den Erregerimpulsen wird das Magnetventil 86 entregt, wobei die Druckluftleitung zum Arbeitszylinder 54 belüftet wird, und der Kolben 53 von der Feder 63 in die in Fig. 3a gezeigte Stellung zurückgeschoben wird, was eine entsprechende Schwenkbewegung des Wischers über das Fenster 14 bewirkt. Zugleich wird das Versprühen der Waschflüssigkeit unterbrochen.

Bei jeder Schwenkung des Wischers 51 über das Fenster 14 wird das Licht von der LED 21 zur Fotodiode 19 unterbrochen, als wäre die Transparenz des Fensters 14 auf 0 abgesunken. Dann zeigt das Drehspulinstrument 82 für kurze Zeit seinen Maximalwert, und das andere Schaltrelais 84 wird erregt. Die Erregung des anderen Schaltrelais 84 hat jedoch keinen Einfluss auf die Alarmeinrichtung 87, weil während der Dauer jedes Impulses vom ersten Impulsgeber 91 das zweite Relais 94 erregt und damit die Verbindungsleitung vom Schaltrelais 84 zur Alarmeinrichtung 87 unterbrochen ist.

Sobald das Fenster 14 gereinigt ist, und die Lichtdurchlässigkeit wieder einen Wert erreicht hat der unter dem angenommenen Grenzwert von 30 % Lichtundurchlässigkeit liegt, fällt das eine Schaltrelais 83 wieder ab, und der Waschvorgang ist beendet.

Bildet sich auf der Aussenfläche des Fensters 14 eine Eisschicht, dann nimmt dessen Lichtdurchlässig relativ rasch ab. Erreicht dann die Transparenz einen Wert entsprechend einer Anzeige des Drehspulinstruments 82 von 30 % des Maximalwerts, so wird, wie vorgängig beschrieben, zu diesem Zeitpunkt t1 (Fig. 5b, rechter Teil) das eine Schaltrelais 83 erregt. Weil, wie gesagt, bei der Eisbildung die Lichtdurchlässigkeit des Fensters 14 rasch abnimmt, erreicht das Drehspulinstrument 82 den Anzeigewert von 60 % des Maximalwerts schon zu einem Zeitpunkt t2 zu dem die Differenz $t2 - t1 = \tau 5$ kleiner ist als $\tau 1$, d. h. die Länge der Pause vor dem ersten Impuls vom Impulsgeber 91. Das zum Zeitpunkt t2 erregte andere Schaltrelais 84 erregt dann seinerseits über das zweite Relais 94, dessen Kontakte geschlossen sind, die Alarmeinrichtung 87. Gleichzeitig erregt das andere Schaltrelais 84 auch das erste Relais 90, dessen Kontakte geöffnet werden, und die Aktivierung des ersten Impulsgebers 91 unterbrechen. Damit ist sichergestellt, dass das zweite Relais 94 nicht erregt und damit auch die Leitung zur Alarmeinrichtung 87 nicht unterbrochen wird.

Es versteht sich, dass die erste Baugruppe des Eingangsverstärkers 76 vorteilhafterweise ein RC-Glied ist, das die Gleichstromkomponente des Ausgangssignals der Fotodiode 19 unterdrückt, sodass in den nachgeschalteten Baugruppen nur noch der pulsierende Gleichstrom verarbeitet wird. Es versteht sich weiter, dass der Wischer 51 nicht notwendigerweise mit Druckluft betrieben werden muss, sondern entsprechend der vorgesehenen Verwendung der Vorrichtung und der verfügbaren Energie, ebensogut mit Unterdruck oder mit einem Elektromotor oder einem Elektromagneten betrieben werden kann. Es versteht sich auch, dass die Alarmeinrichtung 87 eine optische oder eine akustische Einrichtung sein kann, und dass die Alarmeinrichtung 87 auch mit einer Sicherheitseinrichtung gekoppelt werden kann, die bei Eisalarm die überwachte Maschine abschaltet oder mit einer Heizung, die bei Eisalarm eingeschaltet wird. Die in den Figuren 3a und 3b gezeigte Ausführungsform der Vorrichtung war zum Einsetzen in den Lauf eines Axialverdichters vorgesehen. Als Waschflüssigkeit wurde eine Mischung aus 15 % Isopropanol und 85 % Wasser verwendet. Der erste Impulsgeber 91 erzeugte Impulse mit einer Dauer von 30 Sek. und einem Abstand von etwa 5 Min. Der zweite Impulsgeber 93 erzeugte Impulse mit einer Dauer und einem Abstand von etwa 5 Sek. Es versteht sich schliesslich, dass die beispielsweise genannten Schwellwerte für die Schaltrelais 83, 84, ebenso wie die vorstehend genannten Zeitspannen für die Dauer der Impulse und der dazwischen liegenden Pausen für eine optimale Wirkung der Vorrichtung beliebig eingestellt werden können.

## Patentansprüche

1. Vorrichtung zum Ueberwachen der Eisbildung mit einer Strahlungsquelle (21), die Strahlen kontinuierlich aussendet, mit einer strahlungsempfindlichen Einrichtung (19), die auf die einfallenden Strahlen anspricht und ein elektrisches Ausgangssignal erzeugt, und mit einem transparenten Element (14), das zwischen der einen Strahlungsquelle (21) und der strahlungsempfindlichen Einrichtung (19) angeordnet ist und dessen Strahlendurchlässigkeit sich in Abhängigkeit seines Oberflächenzustandes ändert, gekennzeichnet durch eine weitere Strahlungsquelle (18), die Strahlen intermittierend aussendet, wobei die strahlungsempfindliche Einrichtung (19) auf die Strahlen der einen und der weiteren Strahlungsquelle (21 bzw. 18) anspricht, um in Abhängigkeit von der Strahlendurchlässigkeit des transparenten Elements (14) ein dominierend kontinuierliches oder ein stark intermittierendes Ausgangssignal abzugeben.

2. Vorrichtung nach Anspruch 1, dadurch gekennzeichnet, dass ein Gehäuse (10) vorgesehen ist, dass die eine Strahlungsquelle (21) ausserhalb und die weitere Strahlungsquelle (18) und die strahlungsempfindliche Einrichtung (19) innerhalb des Gehäuses (10) angeordnet sind, und dass das transparente Element (14), dessen Aussenfläche entsprechend dem jeweiligen Oberflächenzustand als Messfläche (15) verwendet ist und die Weiterleitung der von der einen Strahlungsquelle (21) ausgesandten Strahlung zur strahlungsempfindlichen Einrichtung (19) beeinflusst, in einer Wand des Gehäuses (10) angeordnet ist.

3. Vorrichtung nach Anspruch 1, dadurch gekennzeichnet, dass die strahlungsempfindliche Einrichtung (19) eine Kennlinie (25, Fig. 2) für das Ausgangssignal in Abhängigkeit von der einfallenden Strahlung aufweist, mit einem im Bereich geringer einfallender Strahlung steilen, praktisch linearen Teil (28) und mit einem im Bereich starker einfallender Strahlung sich verflachenden, in eine Sättigungskurve übergehenden Teil.

4. Vorrichtung nach Anspruch 1, gekennzeichnet durch eine elektronische Schaltung (Fig. 4) mit einem Eingangsverstärker (76), der den kontinuierlichen Anteil des von der strahlungsempfindlichen Einrichtung (19) abgegebenen Ausgangssignals unterdrückt und den intermittierenden Anteil an ein Anzeigeinstrument (82) weiterleitet.

5. Vorrichtung nach Anspruch 1, gekennzeichnet durch eine elektronische Schaltung mit einem zwei Verstärkerkanäle aufweisenden Grenzwertverstärker (78), der mit zwei Schaltrelais (83, 84) zusammenwirkt, wobei jedes dieser Schaltrelais einem der Verstärkerkanäle zugeordnet und auf einen anderen Grenzwert des Erregerstroms, bei dem das Relais anzieht, eingestellt ist.

6. Vorrichtung nach Anspruch 5, gekennzeichnet durch eine Steuerschaltung (79) mit zwei Eingängen, von denen jeder mit einem der Schaltrelais (83, 84) verbunden ist und das eine Schaltrelais (83) in erregtem Zustand einen ersten Impulsgeber (91) (Fig. 5a) aktiviert, der bei jedem Impuls einen zweiten Impulsgeber (93) aktiviert, der seinerseits bei jedem Impuls eine Wascheinrichtung (49, 51) für das transparente Element (14) erregt.

7. Vorrichtung nach Anspruch 6, dadurch gekennzeichnet, dass die Steuerschaltung (79) in der Verbindungsleitung zwischen dem dem einen Schaltrelais (83) zugeordneten Eingang und dem ersten Impulsgeber (91) ein erstes Relais (90) aufweist, dessen Kontakte im nichterregten Zustand geschlossen sind und dessen Erregerwicklung mit dem den anderen Schaltrelais (84) zugeordneten Eingang verbunden ist, sowie zwischen dem letztgenannten Eingang und einem einer Alarmeinrichtung (87) zugeordneten Ausgang ein zweites Relais (94), dessen Kontakte ebenfalls im nichterregten Zustand geschlossen sind und dessen Erregerwicklung mit dem Ausgang des ersten Impulsgebers (91) verbunden ist (Fig. 5a).

8. Vorrichtung nach Anspruch 7, dadurch gekennzeichnet, dass der erste Impulsgeber (91) derart eingestellt ist, dass die Zeitspanne zwischen der Aktivierung und dem Erzeugen des ersten Impulses grösser ist als die Zeitspanne zwischen dem Erregen des einen und des anderen Schaltrelais (83 bzw. 84) beim Vereisen des transparenten Elements (14).

## Claims

1. Apparatus for monitoring ice formation with a radiation source (18), which continuously emits rays, with a radiation-sensitive device (19) responding to the instant rays and producing an electrical output signal, and with a transparent element (14) arranged between radiation source (18) and the radiation-sensitive device (19) and whose radiation transmissibility varies as a function of its surface state, characterized by a further radiation source (21), which intermittently emits rays, the radiation-sensitive device (19) responding to the rays of the first radiation source (18) and the further radiation source (21), so as to emit a mainly continuous or a strongly intermittent output signal as a function of the radiation transmissibility of the transparent element (14).

2. Apparatus according to claim 1, characterized in that a housing (10) is provided, that the first radiation source (18) is positioned outside and the further radiation source (21) and the radiation-sensitive device (19) inside the housing (10), and that the transparent element (14), whose outer face is used as a measuring surface (15) corresponding to the particular surface state and which influences the passing on of the radiation emitted by one radiation source (18) to the radiation-sensitive device (19) is arranged in a wall of housing (10).

3. Apparatus according to claim 1, characterized in that the radiation-sensitive device (19) has a characteristic line (25) (Fig. 2) for the output signal as a function of the incident radiation, with a steep substantially linear part in area (28) having a small incident radiation and with a flattening part passing into a saturation curve in the area (29) of stronger incident radiation.

4. Apparatus according to claim 1, characterized by an electronic circuit (Fig. 4) with an input amplifier (76) which suppresses the continuous part of the output signal emitted by the radiation-sensitive device (19) and passes on the intermittent part to an indicating instrument (82).

5. Apparatus according to claim 1, characterized by an electronic circuit with a limit value amplifier (78) having two amplifier channels and which cooperates with two switching relays (83, 84), each of the latter being associated with one of the amplifier channels and which is set to another limit value of the energizing current at which the relay is energized.

6. Apparatus according to claim 5, characterized by a control circuit (79) with two inputs, each of which is connected to one of the switching relays (83, 84) and one switching relay (83) in the energized state activates a first pulse generator (91) (Fig. 5a) which, during each pulse, activates a second pulse generator (93), which in turn energizes a washing means (49, 51) (Fig. 5a) for the transparent element (14) during each pulse.

7. Apparatus according to claim 6, characterized in that the control circuit (79) has in the connecting line between the input associated with switching relay (83) and the first pulse generator (91), a first relay (90), whose contacts are closed in the unenergized state and whose energizing winding is connected to the input associated with the other switching relay (84), as well as between the latter input and an output associated with an alarm device (87), a second relay (94), whose contacts are also closed in the unenergized state and whose energizing winding is connected to the output of the first pulse generator (91) (Fig. 5a).

8. Apparatus according to claim 7, characterized in that the first pulse generator (91) is set in such a way that the time interval between the activation and the producing of the first pulse is longer than the time interval between energizing each of the switching relays (83, 84) in the case of icing of the transparent element (14).

## Revendications

1. Dispositif de contrôle du givrage comportant une source de rayonnement (18) émettant des rayons en continu, un organe sensible aux rayonnements (19) qui réagit aux rayons incidents et produit un signal électrique de sortie, et un élément transparent (14), qui est disposé entre la source de rayonnement (18) et l'organe sensible aux rayonnements (19) et dont la transparence aux rayons se modifie en fonction de l'état de sa surface, caractérisé par une deuxième source de rayonnement (21), laquelle émet des rayons intermittents, moyennant quoi l'organe sensible aux rayonnements (19) réagit aux rayons de la première (18) et de la deuxième source de rayonnement (21) de manière à délivrer, en fonction de la transparence optique de l'élément transparent (14), un signal de sortie à dominante continue ou un signal de sortie fortement intermittent.

2. Dispositif selon la revendication 1, caractérisé en ce qu'il comporte un boîtier (10), en ce que la première source de rayonnement (18) est disposée à l'extérieur, et la deuxième source de rayonnements (21) ainsi que l'organe sensible aux rayonnements (19) à l'intérieur du boîtier (10), et en ce que l'élément transparent (14), dont la face extérieure en fonction de l'état de mesure (15), et influence l'état ultérieur du rayonnement émis par la première source de rayonnement (18) en direction de l'organe sensible aux rayonnements (19), est disposé sur une paroi du boîtier (10).

3. Dispositif selon la revendication 1, caractérisé en ce que l'organe sensible aux rayonnements (19) présente (fig. 2) une courbe de fonctionnement (25) du signal de sortie en fonction du rayonnement incident comportant dans la zone (28) d'un faible rayonnement incident une partie à forte pente, pratiquement linéaire, et dans la zone (29) d'un rayonnement incident intense une partie aplatie, se transformant en courbe de saturation.

4. Dispositif selon la revendication 1, caractérisé par un circuit électronique (fig. 4) comportant un préamplificateur (76), qui supprime la fraction continue du signal de sortie délivré par l'organe sensible aux rayonnements (19) et transmet la fraction intermittente à un instrument de mesure (82).

5. Dispositif selon la revendication 1, caractérisé par un circuit électronique comportant un amplificateur de valeur limite (78) présentant deux canaux d'amplification, qui fonctionne en coopération avec deux relais de commande (83, 84), de telle sorte que chacun de ces relais de commande est affecté à un des deux canaux d'amplification et est réglé sur une valeur limite différente du courant d'excitation, par lequel le relais est actionné.

6. Dispositif selon la revendication 5, caractérisé par un circuit de commande (79) comportant deux entrées, dont chacune est reliée à l'un des relais de commande (83, 84), et en ce que l'un des relais de commande (83), dans sa position d'excitation, active (fig. 5a) un premier impulseur (91), qui à chaque impulsion active un deuxième impulseur (93), lequel active à chaque impulsion une installation de lavage (49, 51) (fig. 3a) de l'élément transparent (14).

7. Dispositif selon la revendication 6, caractérisé en ce que le circuit de commande (79) comporte sur le conducteur de raccordement entre l'entrée affectée à l'un des relais de commande (83) et le premier impulseur (91), un premier relais (90), dont les contacts sont fermés dans sa position de repos, et dont l'enroulement inducteur est relié à l'entrée affectée à l'autre relais de commande (84), et comporte également, entre cette dernière entrée et une sortie affectée à une installation d'alarme (87), un deuxième relais (94), dont les contacts sont également fermés dans sa position de repos, et dont l'enroulement inducteur est relié à la sortie du premier impulseur (91) (fig. 5a).

8. Dispositif selon la revendication 7, caractérisé en ce que le premier impulseur (91) est réglé de telle manière que l'écart de temps entre l'activation, et la production de la première impulsion, est plus grand que l'écart de temps entre l'excitation du premier et du deuxième des relais de commande (83, 84), lors du givrage de l'élément transparent (14).

**0 079 645**

Fig. 1

Fig. 2

1

**0 079 645**

Fig. 3ᵃ    Fig. 3ᵇ

Fig. 4

Fig. 5ᵃ

Fig. 5ᵇ